(19) Europäisches Patentamt

European Patent Office

Office européen des brevets

(11) Publication number: **0 278 568 B1**

(12) **EUROPEAN PATENT SPECIFICATION**

(45) Date of publication of patent specification: **05.08.92** (51) Int. Cl.⁵: **B64D 1/00**, B64D 7/00

(21) Application number: **88200200.9**

(22) Date of filing: **04.02.88**

(54) **A container for jamming means.**

(30) Priority: **09.02.87 SE 8700504**

(43) Date of publication of application:
**17.08.88 Bulletin  88/33**

(45) Publication of the grant of the patent:
**05.08.92 Bulletin  92/32**

(84) Designated Contracting States:
**DE FR GB IT SE**

(56) References cited:
**EP-A- 0 036 239       EP-A- 0 190 800**
**EP-A- 0 193 487       SE-B- 417 133**
**SE-B- 435 964         US-A- 2 501 379**
**US-A- 2 973 712       US-A- 3 765 336**
**US-A- 4 404 912**

(73) Proprietor: **NobelTech Systems Aktiebolag**

**S-175 88 Järfälla(SE)**

(84) Designated Contracting States:
**DE FR GB IT SE**

(72) Inventor: **Lindgren, Bo Sven**
**c/o INT. OCTROOIBUREAU B.V. Prof. Holst-**
**laan 6**
**NL-5656 AA Eindhoven(NL)**
Inventor: **Näsvall, Alf Gustav**
**c/o INT. OCTROOIBUREAU B.V. Prof. Holst-**
**laan 6**
**NL-5656 AA Eindhoven(NL)**

(74) Representative: **Falk, Bengt**
**Swedish Ordnance Patents and Trademarks**
**S-691 80 Karlskoga(SE)**

# Description

The invention relates to a container for jamming means, for example, radar chaff, IR-burning bodies or similar, the container being intended to be brought with a craft in a dispensing device and the jamming means being intended to be dispensed from the dispensing device for the purpose of diverting or for other purposes, the container comprising a frame with bottom and side wall elements being provided with an insertion defining a space for said jamming means.

In this connection jamming means intended both active jamming means, such as IR-burning bodies and passive jamming means, such as radar chaff. Other examples of jamming means are smoke delivering means and radar reflectors.

EP-A-0 193 487 discloses such a container. In the prior art container insertions filled with jamming means are stored in a closed frame with bottom, top and side wall elements. When dispensing the jamming means an explosive impuls means is detonated causing the insertion with jamming means to leave the frame. It is to be noted that the frame is not ejected from the dispensing device but only the insertion with jamming means. To cope with the detonation forces the frame must be rigid not to damage the dispensing device in which it is located and to obtain a reliable dispensing of the jamming means. The closed shape of the frame and rigidity requirements result in a relatively heavy frame.

The object of the invention is to obtain a container having a lower weight and thereby create greatest possible carrying capacity for jamming means but which nevertheless has enough stability. It is important that the container before dispensing has such a stability that the handling properties when, for example, storing, transporting or loading, are not deteriorated. Besides the containers have to cope with the environment offered by the dispensing device, i.e. among other things they have to cope with the forces to which the containers are subjected during the movement of the craft and especially in combination with simultaneous dispensing of containers. Stoppage of operation in the dispensing device due to insufficient stability of the containers has to be avoided.

The object of the invention is obtained in that the frame has an open structure and that the insertion is adapted to occupy the space defined by the bottom and side wall elements of the frame, a cooperation between the relatively instable frame and the relatively instable insertion when assembled resulting in a dispensable rigid container of which the frame and the insertion are separable after dispensing. The frame and the insertion are each relatively instable elements. However, when the insertion is applied in the frame an essentially more rigid unit is obtained. The reason is that the rigidity built-in in the frame and the insertion cooperate in a favourable way. As a separate element the insertion is relatively rigid in the plane of the frame construction, while the frame construction is relatively rigid in a direction transversely to the plane of the frame construction.

When the container is dispensed from the dispenser device on a craft, for example, an airplane, the jamming means carrying insertion is separated from the frame relatively quickly and the spreading of the jamming means starts. The frame is retarded in the air streams surrounding the airplane. The frame does not constitute any greater air hole and will consequently follow a more well defined and predictable ballistic curve and the risk of collisions between the frame and the airplane dispensing the frame or a following plane may be reduced thereby. Nevertheless, in the case that the frame should collide with an object, the risk of damage is eliminated in that the frame no longer is a rigid construction when the insertion has been separated from the frame.

Furthermore, in order to weaken the frame, the container according to a favourable embodiment may be characterized in that the frame is provided with special weakenings.

The invention will be described in more detail by means of embodiments with reference to the accompanying drawings, in which

Figures 1a-d in a perspective view show a first embodiment of the container,

Figure 2 shows a second embodiment of the included frame in plan view,

Figure 3 shows a third embodiment of said frame in plan view, and

Figure 4 shows a cut through of a part of the frame and illustrates an example of a way of coupling two containers together by means of the frame of the containers.

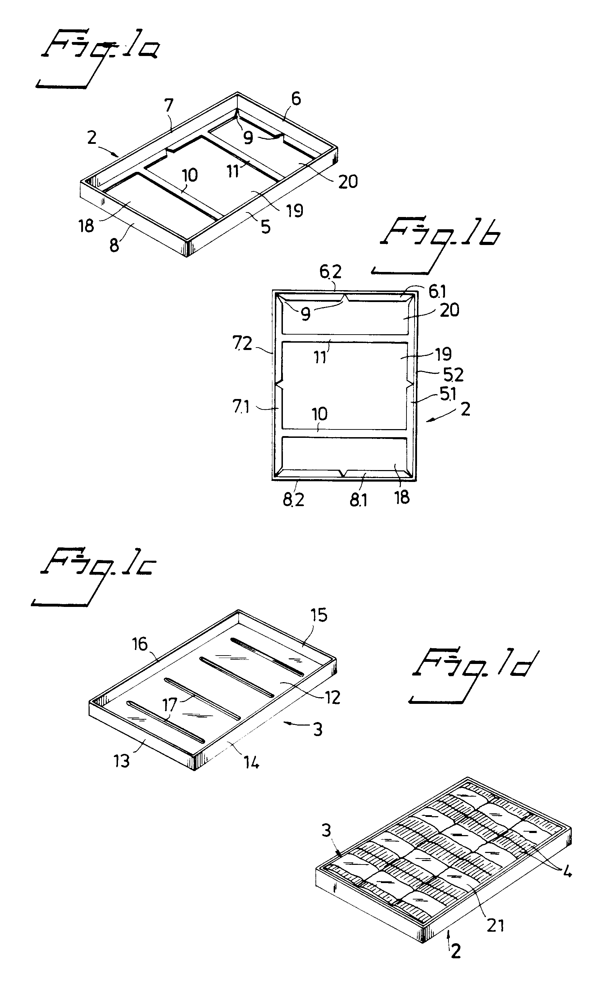

A first embodiment of the container is shown in Figure 1. Figure 1a shows the frame in a perspective view. Figure 1b shows a plan view of the frame according to Figure 1a. Figure 1c shows a perspective view of the insertion in the shape of an insertion box. Figure 1d shows a perspective view of a container according to the first embodiment comprising the frame 2 according to Figure 1a in which the insertion box 3 according to Figure 1c is inserted and filled with radar chaff 4. The frame 2 consists of four angularly shaped elements 5, 6, 7 and 8 arranged in an essentially rectangular configuration, so that the angularly shaped elements 5 and 7 are mutually parallel and the angularly shaped elements 6 and 8 are mutually parallel. Each angularly shaped element comprises a first and a second section disposed at right angles. The first section 5.1, 6.1, 7.1 and 8.1 of each angularly shaped element is situated in a plane common to the four angularly shaped elements, while the second section 5.2, 6.2, 7.2 and 8.2 of the angular elements form an exterior limitation for the circumference of the frame 2. The first sections 5.1, 6.1, 7.1 and 8.1 of the angularly shaped elements 5, 6, 7 and 8 are provided with a number of recesses 9 in order to reduce the rigidity of the frame 2 in the frame plane. The number of recesses and the location of the recesses are chosen in dependence of the requirements for the rigidity of the frame in different directions. Instead of the recesses shown, the weakenings may be incorporated in the frame material. Two beams 10 and 11 are disposed between and parallel to the angularly shaped elements 6 and 8. The insertion box 3 consists of a rectangular bottom plate 12 provided with four walls 13, 14, 15 and 16. The bottom plate 12 is provided with a number of parallel grooves 17. These grooves 17 are distributed along the bottom plate 12 of the insertion box 3 in such a manner that the grooves 17 are situated in apertures 18, 19 and 20 of the frame 2 when the insertion box 3 is inserted in the frame 2, the apertures being formed of said beams 10 and 11 and the parallel angular shaped elements 6 and 8 being parallel to said beams.

An insertion box 3 filled with jamming means provided in the frame 2 is shown in Figure 1d. The jamming means 4 here consist of radar chaff devided into groups. Each group is surrounded by a joint, preferably of paper. The groups of radar chaff surrounded by joints are shown here as having essentially the same length. However, it is quite possible to arrange groups of radar chaff having different lengths all according to the target characteristics that the radar chaff shall try to imitate.

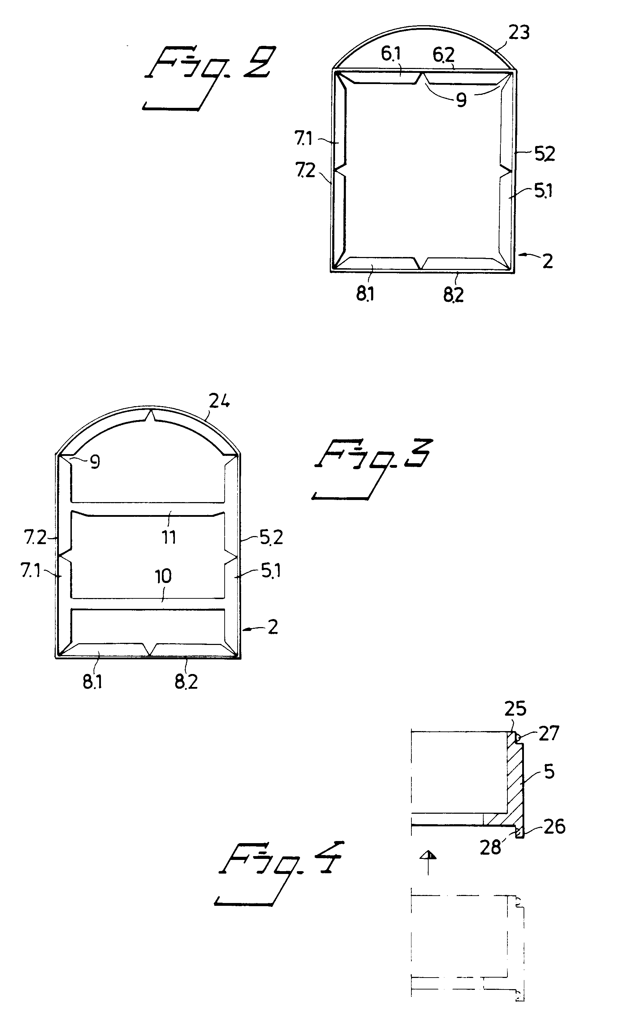

The embodiment of the frame shown in Figure 2 comprises an arched section 23 disposed between the ends of the angularly shaped elements 6 in addition to the angularly shaped elements 5, 6, 7 and 8 specified with reference to Figure 1. The shape of the frame shown in Figure 2 admits good adaption of the containers to the available storage space in the dispenser device.

The frame shown in figure 3 optimizes the jamming means space in respect of the shape of the available storage space. One of the angular shaped elements 6 is in this case replaced with an arched angular shaped element 24.

Figure 4 shows a cut through a part of the frame. The cut is intended to show a way of coupling of number of frames together to a connected unit. The second sections 5.2, 6.2, 7.2, 8.2 of the angular shaped elements are hereby provided with a tapering termination 25, 26 along the two longitudinal sides. The tapering terminations 25, 26 are so displaced laterally that two adjacent frames overlap each other at the tapering terminations 25, 26. Along the tapering terminations 25, 26 a number of lock means arranged connecting adjacent frames. The lock means consist in the embodiment shown of projecting means 27 engaging with grooves 28. The grooves 28 are disposed on one of 26 the tapering terminations and the projecting means 27 on the other tappering termination 28. The lock means described above are only given as a non-limiting example and a lot of variants are conceivable within the scope of the invention.

## Claims

1. A container for jamming means (4), for example, radar chaff, IR-burning bodies or similar, the container being intended to be brought with a craft in a dispensing device and the jamming means (4) being intended to be dispensed from the dispensing device for the purpose of diverting or for other purposes, the container comprising a frame (2) with bottom and side wall elements (5-8, 10-11) being provided with an insertion (3) defining a space for said jamming means (4), characterized in that the frame (2) has an open structure and that the insertion (3) is adapted to occupy the space defined by the bottom and side wall elements (10-11, 5-8) of the frame (2), a cooperation between the relatively instable frame (2) and the relatively instable insertion (3) when assembled resulting in a rigid container of which the frame (2) and the insertion (3) are separable after dispensing.

2. A container as claimed in Claim 1, characterized in that the frame (2) comprises four angularly shaped elements (5-8) disposed in an essentially foursided configuration so that a first section (5.1, 6.1, 7.1, 8,1) of each angularly shaped element is situated in a common plane and a second section (5.2, 6.2, 7.2, 8.2) of each angularly shaped element forms an exterior limitation for the circumference of the frame (2) perpendicular to the common plane.

3. A container as claimed in Claim 2, characterized in that a number of beams (10, 11) are disposed essentially parallel to two of the angularly shaped elements (6, 8) in the foursided configuration.

4. A container as claimed in any of the preceding claims, characterized in that the frame is provided with weakenings (9).

5. A container as claimed in Claim 4, characterized in that the weakenings consist of recesses (9) provided in the second section (5.1, 6.1, 7.1, 8.1) of the angularly shaped elements.

6. A container as claimed in Claim 4, characterized in that the weakenings consist of material weakenings inherent in the angularly shaped elements (5-8).

7. A container as claimed in any of the preceding claims, characterized in that the insertion (3) comprises an essentially flat bottom plate (12) and a surrounding rim (13-16).

8. A container as claimed in Claim 7, characterized in that bottom plate (12) comprises a number of parallel grooves (17) so disposed that the grooves are accommodated in apertures (18-20) of the frame.

**Revendications**

1. Conteneur pour leurres (4), par exemple paillettes ou rubans métalliques pour leurrer des radars, des corps brûlant en émettant un rayonnement infrarouge, ou semblables, le conteneur étant prévu pour être emmené par un navire ou un aéronef, dans un dispositif distributeur, et les leurres (4) étant prévus pour être distribués par le dispositif distributeur dans le but de leurrer ou pour d'autres buts, le conteneur comportant un cadre (2), avec un fond et des éléments formant paroi latérale (5-8, 10-11), muni d'une garniture insérée (3) délimitant un espace pour loger lesdits leurres (4), conteneur caractérisé par le fait que le cadre (2) a une structure ouverte et que la garniture insérée (3) est conçue pour occuper l'espace délimité par le fond et par les éléments formant des parois latérales (10-11, 5-8) du cadre (2), une coopération entre le cadre (2), relativement instable, et la garniture insérée (3), relativement instable, donnant, une fois qu'ils sont assemblés, un conteneur rigide dont le cadre (2) et la garniture insérée (3) sont séparables après distribution.

2. Conteneur tel que revendiqué dans la revendication 1, caractérisé par le fait que le cadre (2) est constitué par, ou comprend quatre éléments (5-8) en forme de cornière, disposés selon une configuration essentiellement à quatre côtés de façon qu'une première aile (5.1, 6.1, 7.1, 8.1) de chaque élément on forme de cornière soit située dans un plan commun et qu'une seconde aile (5.2, 6.2, 7.2, 8.2) de chaque élément en forme de cornière forme une limitation extérieure cour la périphérie du cadre (2) perpendiculairement au plan commun.

3. Conteneur tel que revendiqué dans la revendication 2, caractérisé par le fait qu'un certain nombre de traverses (10, 11) sont disposées essentiellement parallèlement à deux des éléments (6, 8) en forme de cornière de la configuration à quatre côtés.

4. Conteneur tel que revendiqué dans l'une quelconque des revendications précédentes, caractérisé par le fait que le cadre présente des éléments d'affaiblissement (9).

5. Conteneur tel que revendiqué dans la revendication 4, caractérisé par le fait que les éléments d'affaiblissement consistent en des découpes (9) prévues dans la seconde aile (5.1, 6.1, 7.1, 8.1) des éléments en forme de cornière.

6. Conteneur tel que revendiqué dans la revendication 4, caractérisé par le fait que les éléments d'affaiblissement consistent en des affaiblissements du matériau, inhérents aux éléments (5-8) en forme de cornière.

7. Conteneur tel que revendiqué dans l'une quelconque des revendications précédentes, caractérisé par le fait que la garniture insérée (3) est constituée d'une plaque de fond (12) essentiellement plate et d'un rebord (13-16) qui l'entoure.

8. Conteneur comme revendiqué dans la revendication 7, caractérisé par le fait que la plaque de fond (12) présente un certain nombre de rainures parallèles (17) disposées de façon que les rainures se logent dans les ouvertures (18-20) du cadre.

**Patentansprüche**

1. Behälter für Störmittel (4), z.B. Radardüpel, IR-Brennkörper oder dergleichen, wobei der Behälter zur Verbringung mit einem Flugkörper in einer Verteilvorrichtung bestimmt ist und die Störmittel (4) zur Verteilung aus der Verteilvorrichtung zum Zweck der Ablenkung oder für andere Zwecke bestimmt sind, wobei der Behälter einen Rahmen (2) mit Boden- und Seitenwandelementen (5-8, 10-11) umfaßt, der mit einem Einsatz (3) versehen ist, der einen Aufnahmeraum für die Störmittel (4) definiert, dadurch **gekennzeichnet**, daß der Rahmen (2) eine offene Struktur aufweist und daß der Einsatz (3) den von den Boden- und Seitenwandelementen (10-11, 5-8) des Rahmens (2) definierten Raum einnimmt, wobei das Zusammenwirken zwischen dem relativ unstabilen Rahmen (2) und dem relativ unstabilen Einsatz (3) im zusammengefügten Zustand einen starren Behälter ergibt, dessen Rahmen (2) und Einsatz (3) nach der Entleerung voneinander trennbar sind.

2. Behälter nach Anspruch 1, dadurch **gekennzeichnet**, daß der Rahmen (2) vier winkelig geformte Elemente (5-8) aufweist, die in einer im wesentlichen vierseitigen Form angeordnet sind, so daß ein erster Abschnitt (5.1., 6.1., 7.1., 8.1) eines jeden winkelig geformten Elementes in einer gemeinsamen Ebene liegt und ein zweiter Abschnitt (5.2, 6.2., 7.2., 8.2) eines jeden winkelig geformten Elementes eine Außenbegrenzung für den Umfang des Rahmens (2), senkrecht zur gemeinsamen Ebene, bildet.

3. Behälter nach Anspruch 2, dadurch **gekennzeichnet**, daß eine Anzahl von Trägern (10, 11) im wesentlichen parallel zu zwei der winkelig geformten Elemente (6, 8) in der vierseitigen Konfiguration angeordnet sind.

4. Behälter nach den Ansprüchen 1 bis 3, dadurch **gekennzeichnet**, daß der Rahmen mit Schwächungen (9) versehen ist.

5. Behälter nach Anspruch 4, dadurch **gekennzeichnet**, daß die Schwächungen aus einer im zweiten Abschnitt (5.2., 6.2., 7.2., 8.2) der winkelig geformten Elemente vorgesehenen Aussparungen (9) bestehen.

6. Behälter nach Anspruch 4, dadurch **gekennzeichnet**, daß die Schwächungen aus Materialschwächungen bestehen, die in den winkelig geformten Elementen (5-8) inhärent vorhanden sind.

7. Behälter nach den Ansprüchen 1 bis 6, dadurch **gekennzeichnet**, daß der Einsatz (3) eine im wesentlichen flache Bodenplatte (12) und einen umlaufenden Rand (13-16) aufweist.

8. Behälter nach Anspruch 7, dadurch **gekennzeichnet**, daß die Bodenplatte (12) eine Anzahl paralleler Rillen (17) aufweist, die so angeordnet sind, daß die Rillen in Öffnungen (18-20) des Rahmens aufgenommen sind.

Fig.1a

7  6
2  9
10  11  20
18  19
8  5

Fig.1b

6.2  6.1
9  20
7.2  19
11  5.2
5.1
7.1  10  2
8.2  8.1  18

Fig.1c

15
16
17  12
13  14  3

Fig.1d

3  4
21
2

Fig. 2

Fig. 3

Fig. 4